# EUROPEAN PATENT SPECIFICATION

(11) **EP 2 375 399 B1**
(45) Date of publication and mention of the grant of the patent: **22.05.2013**
(21) Application number: 11158647.5
(22) Date of filing: 17.03.2011
(51) Int. Cl.: G09G 3/32

(54) **Brightness control drive circuit for a current-driven display device**
Antriebsschaltung zur Steuerung der Helligkeit für eine strombetriebene Anzeigevorrichtung
Circuit de commande de contrôle de la luminosité pour dispositif d'affichage à courant

(30) Priority: 09.04.2010 US 757284
(43) Date of publication of application: 12.10.2011
(73) Proprietor: Delphi Technologies, Inc., Troy, MI 48007 (US)
(72) Inventor: Kuhlman, Frederick F., Kokomo, IN 46902 (US); Meleason, Michael Joseph, Kokomo, IN 46902 (US); Rayl, Mark Lamar, Kempton, IN 46049 (US)
(74) Representative: Robert, Vincent

(56) References cited:
- WO-A1-2004/088627
- US-A1- 2006 109 217

## Description

### TECHNICAL FIELD

The present invention relates to current-driven display devices such as organic light-emitting diode (OLED) displays, and more particularly to a brightness control drive circuit that automatically adjusts the display device brightness to compensate for changes in incident ambient lighting.

### BACKGROUND OF THE INVENTION

Usage of color display devices in motor vehicle instrument panels and consoles has increased dramatically with the advent of various OEM electronic systems such as navigation, rear-vision, lane guidance, and night-vision, to name a few. Among the more promising display technologies for automotive usage are current-driven display devices such as organic light-emitting diode (OLED) displays, but even these displays have difficulty meeting the required contrast ratio in high ambient lighting conditions unless the display brightness is set to maximum. However, indiscriminately commanding the display to maximum brightness is not realistic, and doing so unnecessarily degrades the life of the display as well. Moreover, the amount of brightness enhancement (if any) needed to compensate for ambient lighting may be different in different areas of the display. Accordingly, what is needed is a selective and cost-effective way of automatically adjusting the brightness of a current-driven display device such as an OLED display to compensate for changes in incident ambient lighting.

US-A-2006/10927 discloses a device in accordance with the preamble of Claim 1.

### SUMMARY OF THE INVENTION

The present invention is directed to an improved current-driven display device having sub-pixel drive circuits with integral photo-sensitive circuits that modify the respective sub-pixel drive currents as a function of the locally sensed ambient light level. The photo-sensitive circuit may include a photo-transistor or photo-resistor connected in the output circuit of a drive transistor used to control the on-off state of a respective sub-pixel element, or the photo-sensitive circuit may include a photo-resistor that adjusts a control voltage or current supplied to an input circuit of the drive transistor. In any event, the photo-sensitive circuits individually and independently adjust the drive current, and hence the luminance, of each sub-pixel element based on the locally sensed ambient light level to locally and dynamically compensate for changes in ambient light impinging on the display device.

More particularly, the present invention is about a current-driven display device that includes a matrix of sub-pixel elements, each of which is selectively activated by a respective drive transistor to emit light. The display device comprises: for each drive transistor, a photo-sensitive circuit connected in an input circuit or an output circuit of said drive transistor for locally sensing a level of ambient light and modifying a current supplied to a respective sub-pixel element by said drive transistor. So that an intensity of light emitted by the respective sub-pixel element changes with the level of locally sensed ambient light to locally and dynamically compensate for changes in ambient light impinging on said display device.

A resistance of said photo-resistor varies inversely with the level of locally sensed ambient light. Also, an on-resistance of said photo-transistor varies inversely with the level of locally sensed ambient light. The photo-sensitive circuit comprises: a photo-resistor connected in the input circuit of said drive transistor; and a divider resistor connected to a junction between said drive transistor and said photo-resistor. A control voltage at said junction controls a conduction of said drive transistor. A resistance of said photo-resistor varies inversely with the level of locally sensed ambient light so that said control voltage and the conduction of said drive transistor vary directly with the level of locally sensed ambient light.

### BRIEF DESCRIPTION OF THE DRAWINGS

FIG. 1 is a diagram of drive circuitry for a current-driven display device, including a matrix of sub-pixel drive circuits.
FIG. 2 is a circuit diagram of a sub-pixel drive circuit according to an embodiment of this invention.

### DESCRIPTION OF THE PREFERRED EMBODIMENT

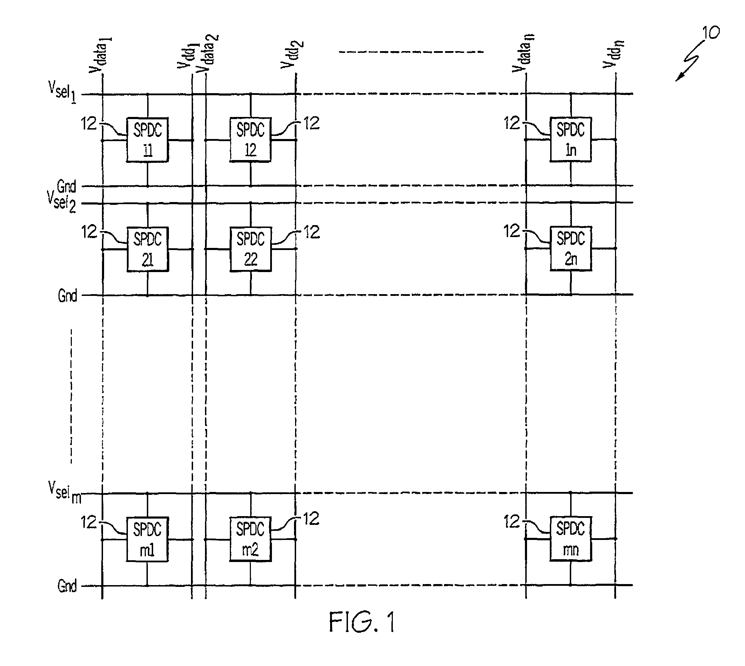

Referring to the drawings, and particularly to FIG. 1, the reference numeral 10 generally designates a current-driven display device such as organic light-emitting diode (OLED) display, and more specifically, drive circuitry for an m-by-n matrix of display device sub-pixel elements 14. A display control circuit, not shown, produces the illustrated row and column control signals, including a ground voltage (Gnd), a set of digital row-select signals Vsel₁-Vselₘ, a set of digital data signals Vdata₁-Vdataₙ, and a set of power voltages Vdd₁-Vddₙ. A matrix of m·n sub-pixel driver circuits (SPDC) 12 are controlled by the row and column control signals to selectively activate the respective sub-pixel elements 14 to emit light and produce a display image or video frame.

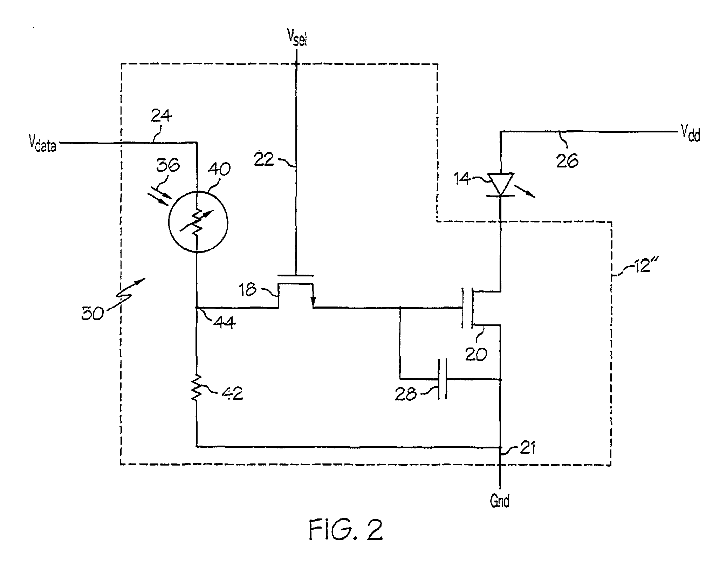

Referring to FIG. 2, each of the sub-pixel driver circuits 12" includes a drive transistor 20 and a photo-sensitive circuit 30 for locally sensing a level of ambient light and modifying a current supplied to a respective sub-pixel element 14 by the drive transistor 20 such that the intensity of light emitted by the sub-pixel element 14 changes with the level of locally sensed ambient light. The current supplied to each sub-pixel element 14 of the display device 10 is individually controlled in this way so that the display brightness is locally and dynamically compensated for changes in ambient light impinging on the display device 10.

Referring to the embodiment of FIG. 2, the drive circuit 12" includes an enhancement-mode field-effect drive transistor 20 whose drain-to-source conduction is controlled by a control voltage at circuit node 44 when the pre-drive transistor 18 is biased on by the respective row-select signal Vsel. In this arrangement, the drive transistor 20 is configured as a low-side device, and the sub-pixel element 14 is connected between the drain of drive transistor 20 and the respective power voltage Vdd. When Vsel is high, the pre-drive transistor 18 is biased on to supply the control voltage at node 44 to the gate of drive transistor 20, and the drain-to-source conduction of drive transistor 20 varies in direct relation to the magnitude of the control voltage at node 44. And as above, the pre-drive transistor 18 is biased off when Vsel is low, with the capacitor 28 controlling the state transition (if any) of drive transistor 20.

The photo-sensitive circuit 30 is coupled in the input circuit of drive transistor 20, and adjusts the control voltage at node 44 as a function of incident ambient lighting. In this embodiment, the photo-sensitive circuit 30 is configured as a voltage divider, including a photo-resistor 40 coupling the respective data signal Vdata to circuit node 44, and a resistor 42 connected between circuit node 44 and ground voltage Gnd. The resistance of resistor 42 is selected such that under dark or low-nominal ambient lighting conditions, the sub-pixel element 14 emits light of desired intensity. As the incident light impinging the photo-resistor 40 increases, its resistance decreases to proportionately increase the control voltage at node 44, and hence, the intensity of light emitted by sub-pixel element 14 (when Vdata and Vsel are both high). As with the other embodiments, this effect occurs independently at each sub-pixel element of display 10 so that the display brightness changes locally and dynamically as required to compensate for changes in ambient light impinging on the display device 10.

In summary, the present invention provides a current-driven display device having photo-sensitive sub-pixel drive circuits for individually and cost-effectively adjusting the brightness of each sub-pixel element to locally and dynamically compensate for changes in ambient light impinging on the display device. While the present invention has been described with respect to the illustrated embodiment, it is recognized that numerous modifications and variations in addition to those mentioned herein will occur to those skilled in the art. For example, it will be recognized that while the photo-sensitive circuits 30 of this invention have been disclosed in the context of specific sub-pixel driver circuits, the illustrated driver circuits are merely representative of driver circuit topologies that can be used for current-driven display devices, and the photo-sensitive circuits 30 may be equally applicable to other driver circuit topologies.

## Claims

1. A current-driven display device (10) including a matrix of sub-pixel elements (14), each of which is selectively activated by a respective drive transistor (20) to emit light, the display device (10) comprising:
for each drive transistor (20), a photo-sensitive circuit (30) connected to the gate of of said drive transistor (30) for locally sensing a level of ambient light and modifying a current supplied to a respective sub-pixel element (14) by said drive transistor (30) such that an intensity of light emitted by the respective sub-pixel element (14) changes with the level of locally sensed ambient light to locally and dynamically compensate for changes in ambient light impinging on said display device (10); **characterised in that** said photo-sensitive circuit (30) comprises:
a photo-resistor (40) connected to the gate of of said drive transistor (20); and
a divider resistor (42) connected to a junction (44) between said drive transistor (20) and said photo-resistor (40), where a control voltage at said junction (44) controls a conduction of said drive transistor (20).

2. The current-driven display device of claim 1, where:
a resistance of said photo-resistor (40) varies inversely with the level of locally sensed ambient light so that said control voltage and the conduction of said drive transistor (20) vary directly with the level of locally sensed ambient light.

## Patentansprüche

1. Eine stromgesteuerte Anzeigevorrichtung (10), die eine Matrix aus Teilpixelelementen (14) umfasst, von denen jedes selektiv durch einen jeweiligen Ansteuerungstransistor (20) aktiviert wird, um Licht zu emittieren, wobei die Anzeigevorrichtung (10) aufweist:
für jeden Ansteuerungstransistor (20), eine photoempfindliche Schaltung (30), die mit dem Gate des Ansteuerungstransistors (30) verbunden ist, zum lokalen Erfassen eines Pegels eines Umgebungslichts und Modifizieren eines Stroms, der an ein jeweiliges Teilpixelelement (14) durch den Ansteuerungstransistor (30) geliefert wird, so dass sich eine Intensität von Licht, das durch das jeweilige Teilpixelelement (14) emittiert wird, mit dem Pegel eines lokal erfassten Umgebungslichts ändert, um lokal und dynamisch Änderungen des Umgebungslichts zu kompensieren, das auf die Anzeigevorrichtung (10) auftrifft;
**dadurch gekennzeichnet, dass**
die photoempfindliche Schaltung (30) aufweist:
einen Photo-Widerstand (40), der mit dem Gate des Ansteuerungstransistors (20) verbunden ist; und
ein Teiler-Widerstand (42), der mit einem Verbindungspunkt (44) zwischen dem Ansteuerungstransistor (20) und dem Photo-Widerstand (40) verbunden ist, wobei eine Steuerungsspannung an dem Verbindungspunkt (44) ein Leitvermögen des Ansteuerungstransistors (20) steuert.

2. Die stromgesteuerte Anzeigevorrichtung gemäß Anspruch 1, wobei:
ein Widerstandswert des Photo-Widerstands (40) mit dem Pegel des lokal erfassten Umgebungslichts umgekehrt variiert, so dass die Steuerungsspannung und das Leitvermögen des Ansteuerungstransistors (20) direkt mit dem Pegel des lokal erfassten Umgebungslichts variieren.

## Revendications

1. Dispositif d'affichage à pilotage par courant (10) incluant une matrice d'éléments de sous-pixel (14), dont chacun est sélectivement activé par un transistor pilote respectif (20) pour émettre une lumière, le dispositif d'affichage (10) comprenant :
pour chaque transistor pilote (20), un circuit photosensible (30) connecté à la grille dudit transistor pilote (30) pour détecter localement un niveau de lumière ambiante et modifier un courant fourni à un élément de sous-pixel respectif (14) par ledit transistor pilote (30) de telle façon qu'une intensité de la lumière émise par l'élément de sous-pixel respectif (14) change avec le niveau de lumière ambiante détectée localement pour compenser localement et de façon dynamique des changements de lumière ambiante qui tombe sur ledit dispositif d'affichage (10) ;
**caractérisé en ce que** ledit circuit photosensible (30) comprend :
une photorésistance (40) connectée à la grille dudit transistor pilote (20) ; et
une résistance de division (42) connectée à une jonction (44) entre ledit transistor pilote (20) et ladite photorésistance (40), de sorte qu'un voltage de commande au niveau de ladite jonction (44) commande une conduction dudit transistor pilote (20).

2. Dispositif d'affichage à pilotage par courant selon la revendication 1, dans lequel :
une résistance de ladite photorésistance (40) varie en sens inverse du niveau de lumière ambiante détectée localement, de sorte que ledit voltage de commande et la conduction dudit transistor pilote (20) varient directement avec le niveau de lumière ambiante détectée localement.
